# EUROPEAN PATENT SPECIFICATION

(11) **EP 2 640 885 B1**
(45) Date of publication and mention of the grant of the patent: **16.09.2015**
(21) Application number: 11779717.5
(22) Date of filing: 11.11.2011
(51) Int. Cl.: D06F 25/00, D06F 58/28, D06F 58/20, F26B 21/00, F28D 1/00

(54) **MACHINE COMPRISING A HEAT PUMP AND RELATED SET OF PROCESSES**
MASCHINE MIT WÄRMEPUMPE UND ZUGEHÖRIGER VERFAHRENSSATZ
MACHINE COMPRENANT UNE POMPE À CHALEUR ET ENSEMBLE ASSOCIÉ DE PROCÉDÉS

(30) Priority: 17.11.2010 EP 10191596
(43) Date of publication of application: 25.09.2013
(73) Proprietor: BSH Hausgeräte GmbH, 81739 München (DE)
(72) Inventor: BALERDI AZPILICUETA, Pilar, E-31272 Zudaire (Navarra) (ES); SAN MARTIN SANCHO, Roberto, E-31200 Estella (ES); KRAUSCH, Uwe-Jens, 14656 Brieselang (DE)
(86) International application number: PCT/EP2011/069944
(87) International publication number: WO 2012/065916

(56) References cited:
- EP-A1- 2 077 350
- EP-A2- 2 182 104
- EP-B1- 2 132 370
- WO-A1-2010/003999
- WO-A1-2010/010679
- WO-A1-2010/012708
- WO-A1-2010/102892
- WO-A2-2010/015570
- DE-A1- 3 407 439
- DE-A1-102007 016 077
- US-A1- 2010 077 787

## Description

The invention relates to a machine comprising a treating chamber for drying humid articles by process air, a process air guide for guiding the process air through said treating chamber in a first circuit closed in itself, said process air guide comprising a first blower for driving the process air, a heat source for heating the process air and placed upstream of said treating chamber, and a heat sink for cooling the process air and placed downstream of said treating chamber, wherein said heat source and said heat sink are included in a heat pump wherein said heat source is provided for transferring heat from a refrigerant to the process air by liquefying the refrigerant, and wherein said heat sink is provided for transferring heat from the process air to the refrigerant by evaporating the refrigerant, said heat pump further comprising a controllable compressor for compressing and driving the refrigerant through said heat pump for transferring heat from said heat sink to said heat source, an expander for expanding the refrigerant, and a refrigerant guide for guiding the refrigerant through said heat pump in a second circuit closed in itself, and an operating unit for operating said process air guide and said heat pump in treating the articles, said operating unit including a power sensor for measuring a power input to operate said compressor, and a temperature sensor for measuring a temperature of said refrigerant in a continuous part of said refrigerant guide including said heat source and excluding said compressor and said expander, wherein said operating unit is provided to operate said compressor to perform at least one drying process for drying the humid articles placed in said treating chamber, said drying process including the step of initiating operation of said blower to drive the process air through said process air guide, initiating operation of said compressor to increase compressing and driving said refrigerant through said refrigerant guide.

Likewise, the invention relates to a set of drying processes comprising at least one drying process for drying humid articles by process air in a machine comprising a treating chamber for drying humid articles by process air, a process air guide for guiding the process air through said treating chamber in a first circuit closed in itself, said process air guide comprising a first blower for driving the process air, a heat source for heating the process air and placed upstream of said treating chamber, and a heat sink for cooling the process air and placed downstream of said treating chamber, wherein said heat source and said heat sink are included in a heat pump wherein said heat source is provided for transferring heat from a refrigerant to the process air by liquefying the refrigerant, and wherein said heat sink is provided for transferring heat from the process air to the refrigerant by evaporating the refrigerant, said heat pump further comprising a controllable compressor for compressing and driving the refrigerant through said heat pump for transferring heat from said heat sink to said heat source, an expander for expanding the refrigerant, and a refrigerant guide for guiding the refrigerant through said heat, pump in a second circuit closed in itself, and an operating unit for operating said process air guide and said heat pump in treating the articles, said at least one drying process including the step of initiating operation of said blower to drive the process air through said process air guide, initiating operation of said compressor to increase compressing and driving said refrigerant through said refrigerant guide.

A machine of the generic type defined above is known from DE 10 2007 016 077 A1. That machine is a condensation-type laundry dryer including a heat pump and including an electric heater to enter heat into a flow of process air for drying laundry. The heat pump includes a compressor that is operable by control of power input, for controlling the total heat production of the heat pump and the electric heater. A drying process of the generic type as specified to the set of processes defined above is also known from the said document DE 10 2007 016 077 A1.

Likewise, a machine and a set of drying processes of the generic types specified above are known from EP 2 182 104 A1. According to that reference the machine is further operated by controlling an operating speed of the compressor.

A machine comprising a treating chamber for drying humid articles by process air, a process air guide for guiding the process air through said treating chamber in a first circuit closed in itself, said process air guide comprising a first blower for driving the process air, a heat source for heating the process air and placed upstream of said treating chamber, and a heat sink for cooling the process air and placed downstream of said treating chamber, wherein said heat source and said heat sink are included in a heat pump wherein said heat source is provided for transferring heat from a refrigerant to the process air by liquefying the refrigerant, and wherein said heat sink is provided for transferring heat from the process air to the refrigerant by evaporating the refrigerant, said heat pump further comprising a controllable compressor for compressing and driving the refrigerant through said heat pump for transferring heat from said heat sink to said heat source, an expander for expanding the refrigerant, and a refrigerant guide for guiding the refrigerant through said heat pump in a second circuit closed in itself, and an operating unit for operating said process air guide and said heat pump in treating the articles, and a set of drying processes comprising at least one drying process for drying humid articles in such machine, are known from DE 34 07 439 A1. The machine according to that document is a laundry dryer comprising a rotatable drum for containing and tumbling articles of laundry to be dried. A process for drying articles of laundry disclosed in that document includes control of temperature of circulating process air by controlling power input to the compressor. In case of overheat flaps may be used in addition to the compressor control to exchange hot process air with cooler ambient air taken from an ambient of the machine. According to document US 2010/0077787 A1, two mutually different drying processes are offered by a drying machine including a heat pump with a controllable compressor. By operating the compressor at different operating speeds or frequencies, a "normal" dry mode and an "energy saving" mode are implemented for use with the drying machine. In case that a temperature within the machine operating in the energy saving mode falls below as predetermined threshold, the operating frequency of the compressor may be increased to provide a desirable rise in temperature.

More disclosure considered to be pertinent presently may be obtained from documents EP 2 132 370 B1, WO 2010/003999 A1, WO 2010/012708 A1, WO 2010/015570 A2, and WO 2010/102892 A1.

All prior art disclosures appear to rely on implementing generally quasi-stationary processes. Further, as far as control of a running process is considered, control is limited to controlling some temperature in the process. Yet, each temperature in the process is affected by more than one constituent factor. On one hand, operation of the heat pump coupled to the drying process is determinative of temperatures in the heat pump as well as in the drying process. On the other hand, mere operation of the heat pump necessarily introduces energy into the heat pump and the drying process; thus, any temperature in the heat pump will gradually rise in response to the introduction of energy and dissipation of energy from the process by limited insulation and other effects. As a conclusion, a temperature is significant to characterize operation of coupled heat pump and drying processes to a limited extent only.

In consideration of the limitations presented by the machines and processes according to the prior art thus discussed, it is a problem to be solved by the present invention to provide a machine and a set comprising at least one drying process for execution in such machine and developed for improvements in process control and in energy consumption upon drying humid articles, in particular humid laundry.

With these and other objects in view there are provided a machine and set of processes comprising at least one drying process as specified in the respective independent claim attached. Preferred embodiments of the machine and the set are specified in respective dependent claims and the subsequent description, with every preferred embodiment of the inventive machine corresponding to a preferred embodiment of the inventive set and vice versa, even if not indicated expressly herein.

According to the invention, the machine comprising a treating chamber for drying humid articles by process air, a process air guide for guiding the process air through said treating chamber in a first circuit closed in itself, said process air guide comprising a first blower for driving the process air, a heat source for heating the process air and placed upstream of said treating chamber, and a heat sink for cooling the process air and placed downstream of said treating chamber, wherein said heat source and said heat sink are included in a heat pump wherein said heat source is provided for transferring heat from a refrigerant to the process air by liquefying the refrigerant, and wherein said heat sink is provided for transferring heat from the process air to the refrigerant by evaporating the refrigerant, said heat pump further comprising a controllable compressor for compressing and driving the refrigerant through said heat pump for transferring heat from said heat sink to said heat source, an expander for expanding the refrigerant, and a refrigerant guide for guiding the refrigerant through said heat pump in a second circuit closed in itself, and an operating unit for operating said process air guide and said heat pump in treating the articles. Further, said operating unit includes a power sensor for measuring a power input to operate said compressor, and a temperature sensor for measuring a temperature of said refrigerant in a continuous part of said refrigerant guide including said heat source and excluding said compressor and said expander, and is provided to operate said compressor to perform at least one drying process for drying the humid articles placed in said treating chamber, said drying process including the following steps:
(a) initiating operation of said blower to drive the process air through said process air guide, initiating operation of said compressor to increase compressing and driving said refrigerant through said refrigerant guide, for a respective predetermined time interval;
(b) measuring the power input, and measuring the temperature, and operating said compressor at a power input equal to a respective predetermined power input until the temperature has reached a respective predetermined temperature threshold, and from then operating said compressor at a power input below said respective predetermined power input to keep the temperature at said respective predetermined temperature threshold, and continuing step (b) until the drying of said articles is completed.

According to the invention, the set of processes for alternative execution comprising at least one drying process for drying humid articles in a machine comprising a treating chamber for drying humid articles by process air, a process air guide for guiding the process air through said treating chamber in a first circuit closed in itself, said process air guide comprising a first blower for driving the process air, a heat source for heating the process air and placed upstream of said treating chamber, and a heat sink for cooling the process air and placed downstream of said treating chamber, wherein said heat source and said heat sink are included in a heat pump wherein said heat source is provided for transferring heat from a refrigerant to the process air by liquefying the refrigerant, and wherein said heat sink is provided for transferring heat from the process air to the refrigerant by evaporating the refrigerant, said heat pump further comprising a controllable compressor for compressing and driving the refrigerant through said heat pump for transferring heat from said heat sink to said heat source, an expander for expanding the refrigerant, and a refrigerant guide for guiding the refrigerant through said heat pump in a second circuit closed in itself, and an operating unit for operating said process air guide and said heat pump in treating the articles, said drying process. Further, this process includes the following steps:
(a) initiating operation of said blower to drive the process air through said process air guide, initiating operation of said compressor to increase compressing and driving said refrigerant through said refrigerant guide, for a respective predetermined time interval;
(b) measuring the power input, and measuring the temperature, and operating said compressor at a power input equal to a respective predetermined power input until the temperature has reached a respective predetermined temperature threshold, and from then operating said compressor at a power input below said respective predetermined power input to keep the temperature at said respective predetermined temperature threshold, and continuing step (b) until the drying of said articles is completed.

In contrast to teachings from prior disclosure, the invention provides for structuring drying processes without any assumption of a drying process to occur in a quasi-stationary fashion. Such structuring provides for smooth initiation and execution, and enables improved performance, including considerable savings in energy consumption. Further, a considerable increase in process stability may be attained. As a particular advantage, cutting compressor operation in order to maintain temperature control may be avoided.

In addition, the invention provides for controlling a drying process in a stable manner by providing use of control of input power as a means for ascertaining unique and reproducible operating parameters and conditions at every point of time. As a matter of fact it has been observed that simple temperature control may prove to be inefficient in maintaining unique operating conditions. At any location within the heat pump, the local operating temperature may not be a unique characteristic of a particular operating condition, but a given operating temperature may occur in several operating conditions that differ from each other considerably. Likewise it has been observed that compressor speed control may be ineffective in controlling heat pump operation. The compressor speed is influenced by a multiplicity of parameters including thermodynamic parameters of the refrigerant upon entry and upon exit; and it is understood in accordance with the invention that the range of parameters wherein a compressor speed is maintained at a constant value may be too large to allow for effective control. In particular, there is nothing like a unique relation between compressor speed and compressor power input. It is also noted that control of compressor speed may be very simple and straightforward, as in the case of a compressor driven by a synchronous motor with permanent magnetic stator. In that case the speed of the motor may be determined by the associated electric circuitry which creates a multiphase AC current at a desired frequency which in its turn defines the speed of the motor regardless of the power input required.

In the context of the invention, the feature of control of power input is to be understood in the broadest sense. While direct measurement of power input is a preferred option, with such direct measurement performed by the control circuitry delivering input power to the compressor itself even more preferred, any indirect assessment of input power by measuring and evaluating any other parameter or set of parameters including multiple temperatures is also comprised in the scope of the invention.

According to the invention it has been found that any additional effort to provide for input power sensing and input power control is more than counterbalanced by advantages obtained in view of improving heat pump performance including energy savings and operational stability.

According to the invention, a set of processes for alternative execution comprising at least one drying process for execution in a machine corresponding to the invention is also provided. This set may consist of a single drying process but will preferably comprise a plurality of drying processes for alternative execution. In particular, the set may comprise a first drying process which is designed to obtain a quick drying of humid articles placed into the machine, and a second drying process which is designed to operate with predominantly low input of energy, thereby possibly accepting some prolongation in time to have humid articles fully dried.

Referring to the feature of the first circuit which guides the process air to be closed in itself it is noted that this does not necessarily imply full sealing between the process air and the ambient. In accordance with usual practice the feature is to be understood to include a first circuit that is not connected to the ambient by any leak that would provide for a considerable exchange of air between the process air and the ambient. Yet, existing leaks may be effective to keep the pressure within the process air essentially at the pressure of the ambient air.

In contrast to the feature of the first circuit to be closed, the refrigerant guide of the heat pump may be understood to be closed so as to maintain the initial load of refrigerant within for a period exceeding any estimated lifetime period of the machine. A reason for this is that a full load of refrigerant is essential for the heat pump to perform its operation properly.

In accordance with a preferred embodiment of the invention, the operating unit includes a speed sensor for measuring an operating speed of said compressor, and is provided to, in step (a) of said at least one drying process, measure the operating speed, and control operation of said compressor to maintain the operating speed at a predetermined initial value for the predetermined time interval. More preferred, the operating unit is provided to, in step (a) and after expiry of the respective predetermined time interval, measure the power input and maintain the operating speed at least at the respective predetermined initial value until the power input has reached the respective predetermined power input, and then proceed to step (b). As an alternative and preferred in particular for a process dedicated to complete quickly, the operating unit is provided to, in step (a) and after expiry of the respective predetermined time interval, measure the power input and increase the operating speed from the respective predetermined initial value until the power input has reached the respective predetermined power input, and then proceed to step (b). Again more preferred for each of the alternatives just defined, a cleaning unit for cleaning said heat sink and operable by said operating unit is provided, and said operating unit is provided to, in step (b), operate said cleaning unit while operating said compressor with maintaining the operating speed at a predetermined cleaning value.

According to preferred embodiments just specified, the invention provides for well-structured and finely controlled start-up of the compressor, to avoid any undue overload and ascertain proper warming-up and lubrication. The start-up may be performed by operating the compressor at a speed and for a time interval as prescribed by its manufacturer. In addition, operation may occur at a prescribed and controlled speed until desired operating conditions, preferably in terms of power input, are attained. All of this may contribute to increased reliability and endurance of the machine. It should be understood that controlling the operating speed of the compressor is not equal or equivalent to controlling the input power fed to the compressor in general. The power consumption of the compressor is determined by its operating speed and by the state of the refrigerant being compressed, with the state of the refrigerant not necessarily being determinative when controlling the speed of the compressor as provided hereby. Further, a cleaning procedure for the heat sink comprised by the heat pump can be properly controlled. Such cleaning procedure may be crucial for operation of a machine embodied as a dryer for articles of laundry since laundry may release fibrous residuals and other particulate matter, commonly termed "lint", which may precipitate on the heat sink and impair its operating performance by clogging channels for passing process air and reducing heat transfer capability.

In accordance with another preferred embodiment of the invention, said at least one drying process that the operating unit would be provided to perform includes a first drying process and a second drying process which may be executed alternatively, wherein said respective power input of said first process is greater than said respective power input of said second drying process, and said respective temperature threshold of said first drying process is greater than said respective temperature threshold of said second drying process. Accordingly, the first drying process is characterized by application of more input power and higher operational temperatures that the second drying process. Therefore, the first drying process may be considerably faster to complete than the second drying process while requiring a higher input of energy.

In the context specified in the previous paragraph said respective temperature threshold of said first drying process is a safety threshold of said compressor. Thereby the first drying process may fully exploit the operational capability of the compressor to obtain a maximum performance. To maintain a high degree of operational safety it may be further preferred to select operational settings of the first drying process to maintain the temperature always lower than the safety threshold. This however implies that the operating unit would be provided to perform, in step (b), controllling of the process largely by controlling power in the compressor to set the operational characteristics of the machine, and limit any concurrent temperature monitoring to maintaining proper operational safety.

In accordance with a further embodiment of the invention as developed to include the alternative of a first drying process and a second drying process as detailed above, said heat pump is designed for operation in said second drying process. This implies that the heat pump is best suited to execute the second drying process which implies a reduced power input and a reduced operational temperature level. As such second drying process will necessarily require an extended amount of time for completion as compared to the first drying process, the embodiment just specified will contribute to keeping that amount within reasonable bounds.

In accordance with the preferred embodiment just specified, a preferred constructional feature of the heat pump is the superheating of the refrigerant provided upon compression, with the superheat defined to be the difference between the temperature of the refrigerant upon exiting the heat sink and the evaporation temperature of the refrigerant at its pressure level upon exiting the heat sink. In contrast to general refrigeration systems where only very small superheats are acceptable from safety considerations, a substantial superheat yet limited superheat may be accepted on a heat pump for application in a drying process. Accordingly, a more preferred embodiment of the invention provides each of said first drying process and said second drying process to have a respective superheat in said refrigerant upon exiting said heat sink, with said respective superheat of said second drying process between 6 °C and 20 °C. The superheat being determined by interaction of the compressor with the expander, an increase in compression as provided by a transition from the second heating process to the first heating process will yield an increase in superheat. Accordingly, a particularly effective superheat in the second drying process may result in a somewhat excessive superheat in the first drying process.

In accordance with yet another preferred embodiment of the invention, a cooling unit operable by said operating unit for cooling said heat pump is provided, with said operating unit provided to operate said cooling unit upon the temperature exceeding said respective predetermined temperature threshold. More preferred, said cooling unit comprises a second blower for passing cooling air along said heat pump. Based on the fact that any process involving pumping of heat requires some power input, such embodiment of the invention provides for extracting heat from a drying process and keep temperatures occurring in the system within appropriate bounds and limits.

In accordance with yet another preferred embodiment of the invention, the refrigerant is selected from the group comprising agents R 290, R134a, R152a, R407C, R410A, and R744. Agent R290 is the hydrocarbon propane which has been found to be quite advantageous for use in a drying process despite its possibly critical flammability if mixed with oxygen or air. Agents R134a, R152a, R407C, and R410A, are fluorinated hydrocarbons or mixtures of such, and agent R744 is carbon dioxide. It should be noted that R744 has a remarkably low critical temperature much blow the critical temperatures of the other agents specified. Thus a heat pump for operation with R744 may require modifications in comparison to heat pumps using any of the other agents, without departing from the scope of the present invention.

A particularly preferred embodiment of the invention is a machine embodied as a household appliance, even more preferredly embodied as a laundry dryer for drying articles which are laundry. Yet more preferred is such embodiment wherein said treating chamber is a rotatable drum.

In accordance with still another preferred embodiment of the invention, at least one of the heat source and the heat sink is a counter flow heat exchanger implying that process air and refrigerant pass the heat exchanger in essentially opposite directions.

In accordance with still a further preferred embodiment of the invention, said compressor has an electric motor that is a synchronous motor with permanent magnetic rotor, usually termed PMS motor ("permanent magnetic synchronous") or BLDC motor ("Brushless DC"), and said operating unit includes an inverter circuit connected to the motor for controlling said motor.

In accordance with again another preferred embodiment of the invention, said expander in said heat pump is controllable by said operating unit. This can be accomplished by selecting the expander to be a valve or combination of valves with variable restriction, or combination of capillaries with variable restriction. Advantages to be obtained with this embodiment include an increase in operational flexibility which may be applied to adapt the heat pump to various drying processes for execution as alternatives, and obtain still more savings in energy.

In accordance with again a further preferred embodiment of the invention, said temperature sensor is thermally coupled to said heat source. Thus, the temperature is obtained at a location where it is particularly significant to indicate operational characteristics of the heat pump in operation.

In accordance with still a further preferred embodiment of the invention, said process air is guided at a pressure equal to an ambient pressure. This includes that absent from pressure variations necessary for driving the process air through the process air guide the process air is kept at a normal pressure. This embodiment will require minimum sealing of the process air guide to avoid unwanted leaks and keeps the design of the machine and process simple and durable for application by users which are generally not skilled in the art.

Preferred embodiments of the invention will now be described in detail with reference to the appended drawing, wherein:
- Fig. 1: shows a schematic diagram of a household appliance comprising a heat pump;
- Fig. 2: shows a diagram of process data taken from a process dedicated to minimum energy expense for execution in an appliance as shown in Fig. 1;
- Fig. 3: shows a diagram of process data taken from a process dedicated to minimum time spent for execution in such appliance; and
- Fig. 4: shows a diagram of process data taken from a process dedicated to minimum time spent for execution in such appliance but with inherent instability due to the control mode applied.

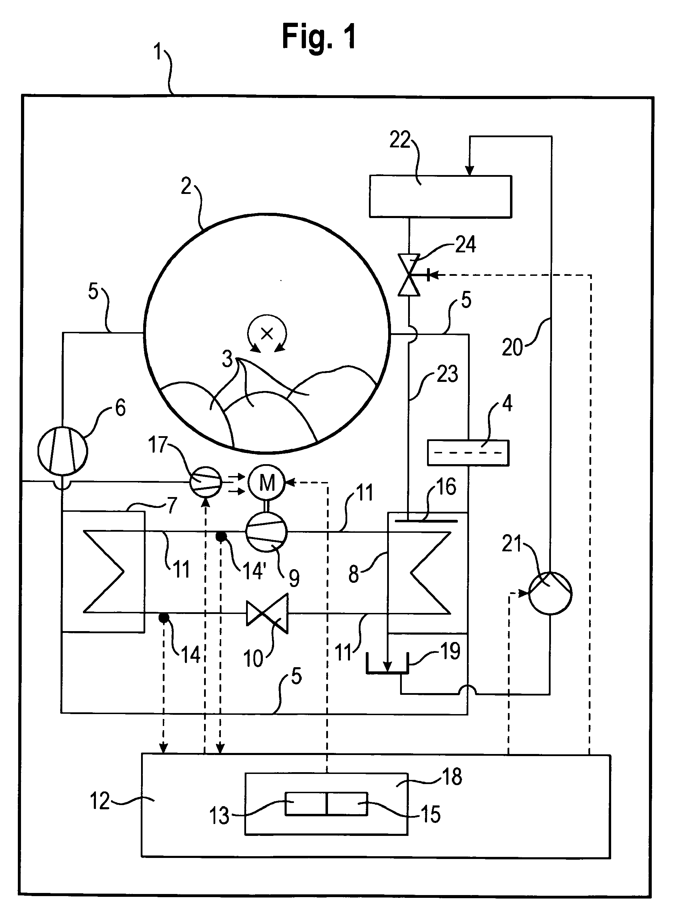

Figure 1 shows a machine 1 having a treatment chamber 2 for containing articles 3 to be treated; with the machine 1 embodied as a household appliance for drying articles 3 that are items of laundry 3. The treatment chamber 2 is configured as drum 2 rotatable about a substantially horizontal axis by drive means not shown for simplicity. Drying the articles 3 is accomplished by having a flow of warm process air pass along the articles 3 to evaporate and pick up humidity from the articles 3. Small particulate matters like fragments of textile fibres and termed "lint" according to common practice may be picked from the articles 3 by the process air as well. To strip such lint from the process air having passed the articles 3 at least to a substantial extent, a lint filter 4 as embodied in a fine plastic or metal mesh 4 is provided. To guide the process air in a substantially closed circuit a process air guide 5 as embodied in a channel with certain additional implements as detailed herein in provided. These implements include, inter alia, a first blower 6 to drive the process air through the process air guide 5 and the drum 2. To heat the process air to a suitable temperature prior to entering drum 2, a heat source 7 is provided in the process air guide 5. The heat source 7 is a heat exchanger where heat is transferred into the process air from a refrigerant circulating through the heat source 7 as detailed hereinbelow. After passing the articles 3 in the drum 2 and the lint filter 4, the process air which is now loaded with humidity and flowing through the process air guide 5 enters a heat sink 8 which is again a heat exchanger. In the heat sink 7, heat is transferred from the process air to the refrigerant which circulates through the heat sink 7 and picks up the heat from the process air by evaporating. Thereby humidity contained in the process air is condensed to form a liquid which is then stripped from the process air and disposed as detailed below. The process air then returns to the heat source 7 to be heated again and passed along the articles 3 to be dried again, thus closing its circuit. It should be noted that in accordance with usual practice the process air guide 5 is sealed to its ambient but kept at a pressure which deviates from the pressure within the ambient of the process air guide only to insubstantial amounts, with pressure differences occurring only insofar as necessary to keep the process air flowing as described.

The machine 1 is generally contained in a housing to define its outer shape in accordance with common practice and to provide an enclosure for keeping any regular user which must be assumed not to have appropriate skills from accessing possibly critical functional components of the machine 1.

In the machine 1 shown in Fig. 1, heat source 7 and heat sink 8 are components of a heat pump 7, 8, 9, 10, 11 which id dedicated to pump heat extracted from the process air in the heat sink 8 to the heat source 7 for returning the heat to the process air again. To that end heat source 7 and heat sink 8 are connected by a compressor 9, an expander 10, and a refrigerant guide 11 closed in itself to circulate a refrigerant from the heat source 7 to the heat sink 8 and back. The expander 10 may be embodied as a throttle, a valve or a capillary. If desired, a combination of such devices with controllable restriction can be provided for the expander 10.

The refrigerant is an agent characterized by evaporation and condensation temperatures at suitable values under condition that the agent is kept at a suitable pressure. In general, the refrigerant may be selected from the group comprising agents commonly specified as R 290, R134a, R152a, R407C, R410A, and R744. Agent R290 is the hydrocarbon propane which has been found to be quite advantageous for use in a drying process despite its possibly critical flammability if mixed with oxygen or air. Agents R134a, R152a, R407C, and R410A, are fluorinated hydrocarbons or mixtures of such, and agent R744 is carbon dioxide. It should be noted that R744 has a remarkably low critical temperature much blow the critical temperatures of the other agents specified. Thus a heat pump 7, 8, 9, 10, 11 for operation with R744 may require modifications in comparison to a heat pump 7, 8, 9, 10, 11 using any of the other agents. In addition it should be noted that the heat pump 7, 8, 9, 10, 11 shown in Fig.1 may contain additional components such as reservoirs and getter devices to strip undesired chemicals like components of air and water from the refrigerant. Such components are commonly used but not shown in Fig. 1 for the sake of simplicity. In the present case, R407C is the refrigerant preferred for use.

To control operation of the machine 1, an operating unit 12 generally embodied as a programmed microprocessor with suitable and common accessories is provided. This operating unit 12 will be programmed to offer a multiplicity of drying programs with options to adapt such programs to the requirements of a user. Presently, the controlling operations to be performed by operating unit 12 include control of the compressor 9 which has a brushless DC (BLDC) motor whose operation may be fully controlled by electronic means to be detailed below. In particular, a power sensor 13 to measure power delivered to the compressor 9 is implemented in the operating unit 12 by commonly known hardware or software electronic means or circuitry. Further, at least one temperature sensor 14, 14' and represented in Fig. 1 by a first temperature sensor 14 assigned to the refrigerant outlet of the heat source 7 and a second temperature sensor 14' at the refrigerant outlet of the compressor 9 are provided. In addition, a speed sensor 15 is implemented in the operating unit 12 by commonly known hardware or software electronic means or circuitry.

While lint filter 4 may be assumed to catch a very large part of all lint produced by the process air passing along the articles 3, a small fraction of the lint must be assumed to pass through lint filter 4. Such residual lint will enter heat sink 8, and will be caught by the condensate formed in the process air. The residual lint will precipitate onto surfaces of the heat sink 8 together with the condensate and stick there; thereby possibly impairing the function of heat sink 8. Accordingly, a cleaning device 16 is provided to remove residual lint from the heat sink 8.

As the thermodynamic process to be executed in the heat pump 7, 8, 9, 10, 11 requires some, if small, net input of energy, it must be expected that the heat pump 7, 8, 9, 10, 11 and the process air guide 5 will be heated gradually through any drying process executed, if the necessary energy input is not balanced by some energy dissipation. To control and enhance such dissipation as necessary, a cooling unit 17 comprising a second blower 17 controllable by the control unit 12 in response to data obtained from sensors 13, 14, and 15, is provided. That cooling unit 17 may, under control of operating unit 12, enhance dissipation of energy from compressor 9 by flowing an amount of air taken from the ambient of the machine 1 along.

To operate the compressor 9, the operating unit 12 includes a power control circuit 18 and commonly termed as inverter circuit 18 which provides a multiphase AC signal to control power input and speed of compressor 9. Accordingly, the power sensor 13 and the speed sensor 15 are included in the inverter circuit 18 as indicated in Fig. 1.

Two steps to clean the heat sink 8 are performed in each drying process by pouring condensate withdrawn from the heat sink 8 through cleaning unit 16 over those portions of the heat sink 8 which are prone to collect residual lint. As a prerequisite, condensate precipitating in the heat sink 8 is collected in a first condensate collector 19 disposed below heat sink 8, and withdrawn from there through condensate collector line 20 and condensate pump 21. The condensate is stored in the second condensate collector 22 which is removable by a user after completing a drying process, the finally dispose of the condensate. A cleaning line 23 equipped with a cleaning valve 24 operable by control unit 12 is connected to the second condensate container 22. Upon executing a cleaning step the normally closed cleaning valve 24 is opened to have the condensate stored therein flow through cleaning line 23 and cleaning unit 16 (which is a distributor to distribute the condensate properly) to the heat sink 8. Finally, the cleaning valve 24 is closed again. The condensate having been used for cleaning flows into the first condensate collector 19 carrying residual lint washed off heat sink 8, and is withdrawn again to the second condensate collector 22 by the condensate pump 21. In each drying process, two cleaning steps are performed, one in the middle of the drying process and one at its end.

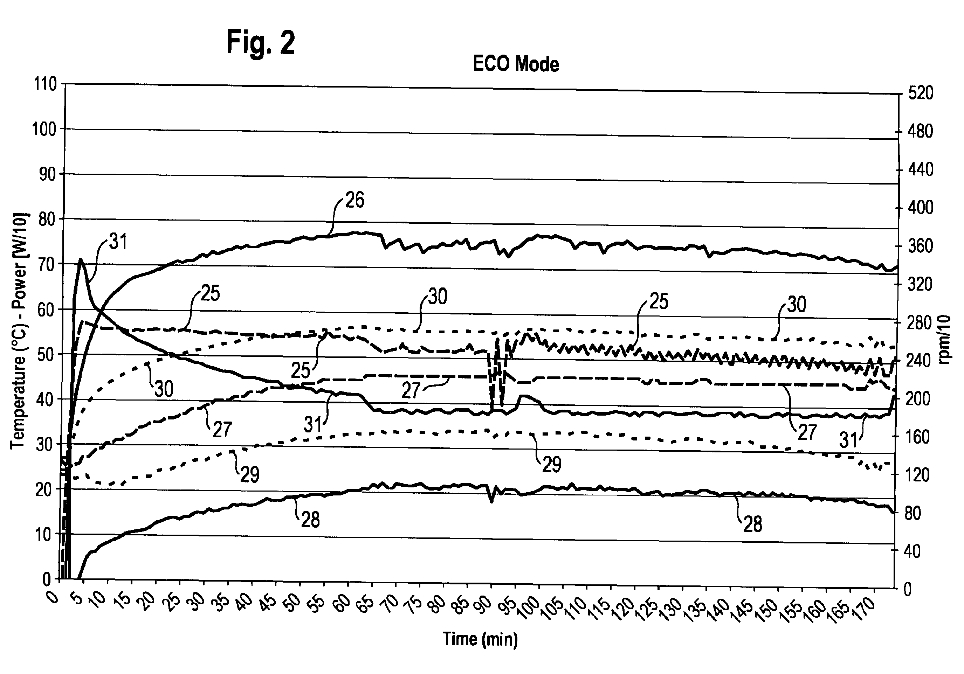

Diagrams showing relevant process data taken from a set of drying processes scheduled to be performed in a machine 1 as exemplified in Fig. 1 are shown in Figs. 2, 3, and 4. In each of these Figures, the types of data shown are specified with reference numerals as follows:
- 25: Compressor power input (measured by power sensor 13)
- 26: Refrigerant temp. at compressor outlet (measured at compressor 9, or at inlet of heat source 7)
- 27: Refrigerant temp. at heat source outlet (measured by temperature sensor 14)
- 28: Refrigerant temp. at heat sink inlet (measured at heat sink 8)
- 29: Refrigerant temp. at heat sink outlet (measured at heat sink 8)
- 30: Process air temperature at heat source outlet (measured at heat source 7)
- 31: Compressor speed (measured by speed sensor 15)

Fig. 2 shows data for a drying process which has been developed for minimum expense of energy to dry a load of laundry 3, with a compromise accepted in view of time required. Cotton laundry 3 has been prepared at a dry net weight of 8 kg and with a water content of 4 kg. After completion of the drying process a residual of 200g of water remained in the laundry 3. The heat pump 7, 8, 9, 11 was filled with 315 g of R407C refrigerant and operated with a maximum power input to compressor 9 of 380 W. Process time required (as measured in operating time of compressor 9) was 173 minutes. Total energy input required for the drying process was 0,198 kWh/kg.

As to operation of compressor 9 in this mode, compressor speed 31 is quite high for some minutes initially. This serves to ensure proper lubrication of the compressor 9, and help that all components of heat pump 7, 8, 9, 10, 11 attain their proper operating conditions quickly. Subsequently the heating process is controlled through compressor input power 25 which is kept constant by the operating unit 12 until minute 60 of the drying process when refrigerant's heat source outlet temperature 27 reaches a predetermined threshold. From then process control is performed by keeping temperature 27 at that threshold. For the sake of completeness it is noted that the first cleaning step is performed around minutes 90 to 95, thereby producing the strong fluctuations in compressor power input 25; the reason is that during the cleaning step compressor 9 is operated at a predetermined speed 31. As an alternative, the speed of operation just prior to the cleaning step could be maintained. Yet, this would be also likely to produce fluctuations in compressor power input 25 as the blower 6 is not driven during the cleaning step. Ignoring some ripples in the process data shown in Fig. 2, the process can be said to operate very smoothly and quasi-stationary for the majority of its time, as soon as operating conditions have reached a balance near minute 60.

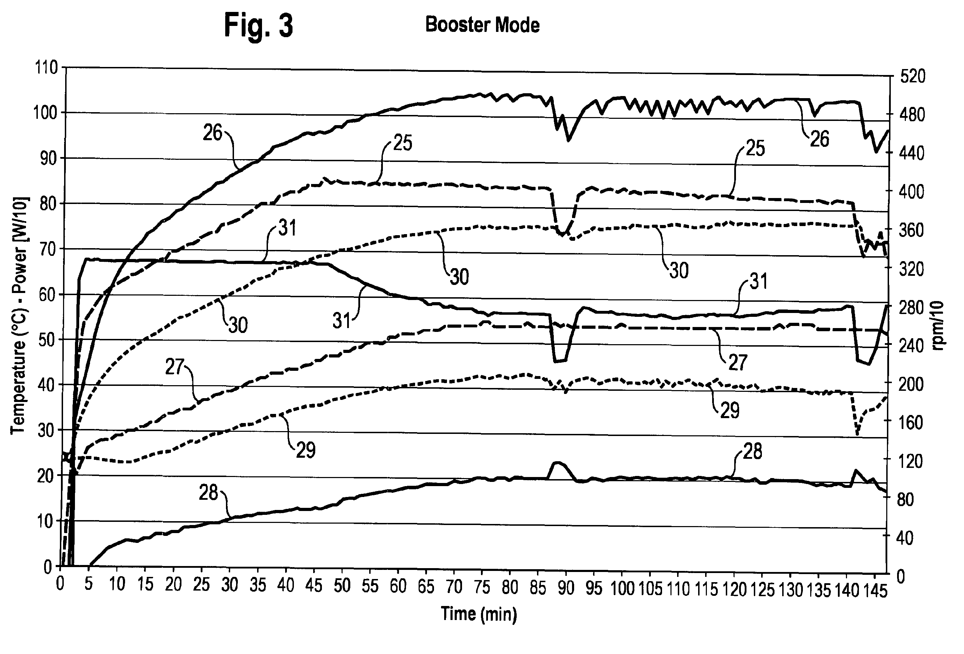

Fig. 3 shows data for a drying process which has been developed for minimum expense of time to dry a load of laundry 3, with a compromise accepted in view of energy input required. Again, cotton laundry 3 has been prepared at a dry net weight of 8 kg and with a water content of 4 kg. After completion of the drying process a residual of 200g of water remained in the laundry 3. The heat pump 7, 8, 9, 10, 11, was filled with 315 g of R407C refrigerant and operated with a maximum power input to compressor 9 of 657 W. Process time required (as measured in operating time of compressor 9) was 146 minutes. Total energy input required for the drying process was 0,238 kWh/kg.

The drying process according to Fig. 3 runs at pronouncedly higher maximal temperatures than the process illustrated in Fig. 2. The drying process according to Fig. 3 starts by controlling compressor speed 31, and keeping compressor speed 31 at a given level. It is noted that this results in an gradual increase in compressor power input 25. As compressor power input 25 reaches a given threshold, the process is switched to control by compressor power input 25, occurring around minute 45. Up to the end of the drying process, compressor power input 25 is kept essentially constant, with a small gradual decrease. Near minute 90 a cleaning step is performed as detailed for Fig. 2; it is noted that the effects to compressor power input 25, refrigerant temperature at compressor outlet 26, refrigerant temperature at heat sink inlet 28, and compressor speed 31 are more pronounced in relation to the effects apparent from Fig. 2. A second cleaning step may be noted in the process according to Fig. 3 near minute 140, about the terminal point of the process.

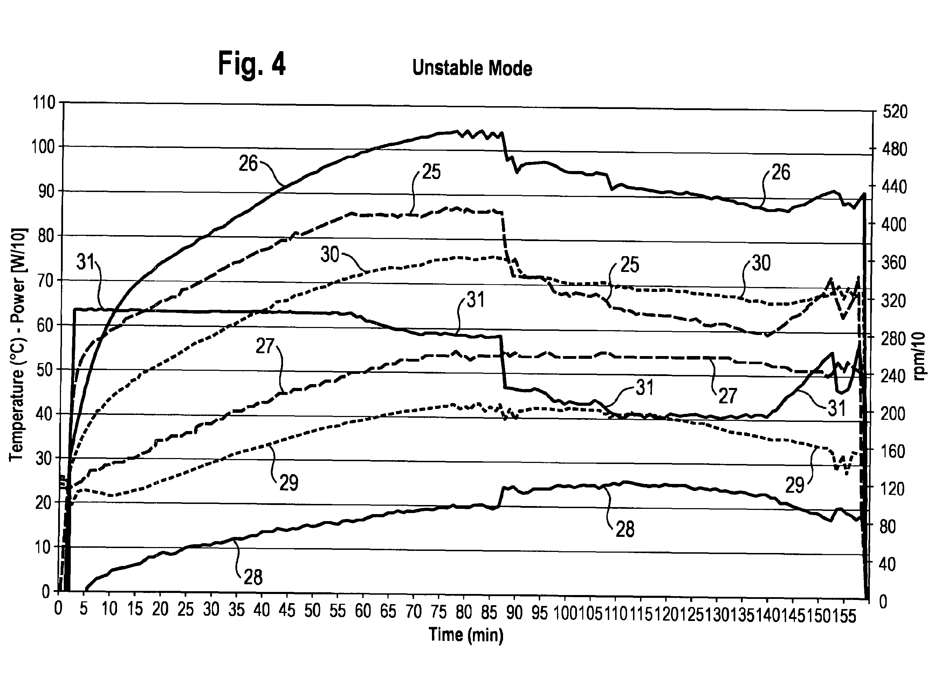

Finally, Fig. 4 shows data for another drying process which has been developed for minimum expense of time to dry a load of laundry 3, with a compromise accepted in view of energy input required. The difference to the process shown in Fig. 3 is a different mode of control which will induce instabilities. Again, cotton laundry 3 has been prepared at a dry net weight of 8 kg and with a water content of 4 kg. After completion of the drying process a residual of 200g of water remained in the laundry 3. The heat pump 7, 8, 9, 10, 11, was filled with 315 g of R407C refrigerant and operated with a maximum power input to compressor 9 of 670 W. Process time required (as measured in operating time of compressor 9) was 158 minutes. Total energy input required for the drying process was 0,233 kWh/kg. While these performance data do not really disqualify this process over the process shown in Fig. 3, it is noted that the process runs into a disadvantageous mode of operation of the heat pump 7, 8, 9, 10, 11 after the first cleaning step near minute 90. the process is started based on compressor speed 31 control until minute 55 where the process is switched to control of compressor power input 25 as apparent from the essentially flat portion of the respective curve 31 in Fig. 4. Near minute 70, the process is switched to control of refrigerant temperature at heat source outlet 27 as apparent from the now flat portion of the respective curve 25 in Fig. 4. The process continues quasi-stationarily to the first cleaning step at minute 90. There, compressor speed 31, refrigerant temperature at compressor outlet 26, and compressor power input 25 drop sharply while refrigerant temperature at heat sink inlet 28 increases sharply, without recovery over most of the remaining time of the process. This defines a disadvantageous mode of operation of heat pump 7, 8, 9, 10, 11 by decreasing overall effectivity of the process, and renders the process inferior as compared to process as shown in Fig. 3, and as exhibited by the prolonged time required for completion.

### Reference Numerals

- 1: Machine, household appliance
- 2: Treating chamber, drum
- 3: Humid articles, laundry
- 4: Lint filter
- 5: Process air guide
- 6: First blower
- 7: Heat pump, heat source
- 8: Heat pump, heat sink
- 9: Heat pump, controllable compressor
- 10: Heat pump, expander
- 11: Heat pump, refrigerant guide
- 12: Operating unit
- 13: Power sensor
- 14: First temperature sensor
- 14': Second temperature sensor
- 15: Speed sensor
- 16: Cleaning unit
- 17: Cooling unit
- 18: Inverter circuit
- 19: First condensate collector
- 20: Condensate collector line
- 21: Condensate pump
- 22: Second condensate collector
- 23: Cleaning line
- 24: Cleaning valve
- 25: Compressor power input
- 26: Refrigerant temp. at compressor outlet
- 27: Refrigerant temp. at heat source outlet
- 28: Refrigerant temp. at heat sink inlet
- 29: Refrigerant temp. at heat sink outlet
- 30: Process air temperature at heat source outlet
- 31: Compressor speed

## Claims

1. Machine (1) comprising a treating chamber (2) for drying humid articles (3) by process air, a process air guide (5) for guiding the process air through said treating chamber (2) in a first circuit closed in itself, said process air guide (5) comprising a first blower (6) for driving the process air, a heat source (7) for heating the process air and placed upstream of said treating chamber (2), and a heat sink (8) for cooling the process air and placed downstream of said treating chamber (2), wherein said heat source (7) and said heat sink (8) are included in a heat pump (7, 8, 9, 10, 11) wherein said heat source (7) is provided for transferring heat from a refrigerant to the process air by liquefying the refrigerant, and wherein said heat sink (8) is provided for transferring heat from the process air to the refrigerant by evaporating the refrigerant, said heat pump (7, 8, 9, 10, 11) further comprising a controllable compressor (9) for compressing and driving the refrigerant through said heat pump (7, 8, 9, 10, 11) for transferring heat from said heat sink (8) to said heat source (7), an expander (10) for expanding the refrigerant, and a refrigerant guide (11) for guiding the refrigerant through said heat pump (7, 8, 9, 10, 11) in a second circuit closed in itself, and an operating unit (12) for operating said process air guide (5) and said heat pump (7, 8, 9, 10, 11) in treating the articles (3), said operating unit (12) including a power sensor (13) for measuring a power input to operate said compressor (9), and a temperature sensor (14, 14') for measuring a temperature of said refrigerant in a continuous part of said refrigerant guide (11) including said heat source (7) and excluding said compressor (9) and said expander (10), wherein said operating unit (12) is provided to operate said compressor (9) to perform at least one drying process for drying the humid articles (3) placed in said treating chamber (2), said drying process including the following steps:
(a) initiating operation of said blower (6) to drive the process air through said process air guide (5), initiating operation of said compressor (9) to increase compressing and driving said refrigerant through said refrigerant guide (11), for a respective predetermined time interval;
(b) measuring the power input, and measuring the temperature, and operating said compressor (9) at a power input equal to a respective predetermined power input until the temperature has reached a respective predetermined temperature threshold, and from then operating said compressor (9) at a power input below said respective predetermined power input to keep the temperature at said respective predetermined temperature threshold, and continuing step (b) until the drying of said articles (3) is completed.

2. Machine (1) according to claim 1, wherein said operating unit (12) includes a speed sensor (15) for measuring an operating speed of said compressor (9), and is provided to, in step (a) of said at least one drying process, measure the operating speed, and control operation of said compressor (9) to maintain the operating speed at a predetermined initial value for the respective predetermined time interval.

3. Machine (1) according to claim 2, wherein said operating unit (12) is provided to, in step (a) and after expiry of the respective predetermined time interval, measure the power input and maintain the operating speed at least at the respective predetermined initial value until the power input has reached the respective predetermined power input, and then proceed to step (b).

4. Machine (1) according to claim 2, wherein the operating unit (12) is provided to, in step (a) and after expiry of the respective predetermined time interval, measure the power input and increase the operating speed from the respective predetermined initial value until the power input has reached the respective predetermined power input, and then proceed to step (b).

5. Machine (1) according to one of claims 2 to 4, wherein a cleaning unit (16) for cleaning said heat sink (8) and operable by said operating unit (12) is provided, and said operating unit is provided to, in step (b), operate said cleaning unit (16) while operating said compressor (9) with maintaining the operating speed at a predetermined cleaning value.

6. Machine (1) according to one of the preceding claims, wherein said at least one drying process includes a first drying process and a second drying process for alternative execution, wherein said respective power input of said first process is greater than said respective power input of said second drying process, and said respective temperature threshold of said first drying process is greater than said respective temperature threshold of said second drying process.

7. Machine (1) according to claim 6, wherein said respective temperature threshold of said first drying process is a safety threshold of said compressor (9).

8. Machine (1) according to claim 7, wherein, in step (b) of said first drying process, the temperature is maintained lower than said safety threshold.

9. Machine (1) according to one of claims 6 to 8, wherein said heat pump (7, 8, 9, 10, 11) is designed for operation in said second drying process.

10. Machine (1) according to claim 9, wherein each of said first drying process and said second drying process has a respective superheat in said refrigerant upon exiting said heat sink (8), with said respective superheat of said second drying process between 6 °C and 20 °C.

11. Machine (1) according to one of the preceding claims, comprising a cooling unit (17) and operable by said operating unit (12) for cooling said heat pump (7, 8, 9, 10, 11) ,and wherein said operating unit (12) is provided to operate said cooling unit (17) upon the temperature exceeding said respective predetermined temperature threshold.

12. Machine (1) according to claim 11, wherein said cooling unit (17) comprises a second blower (17) for passing cooling air along said heat pump (7, 8, 9, 10, 11).

13. Machine (1) according to one of the preceding claims, wherein the refrigerant is selected from the group comprising agents R 290, R134a, R152a, R407C, R410A, and R744.

14. Machine (1) according to one of the preceding claims, which is embodied as a household appliance (1).

15. Machine (1) according to claim 14, which is embodied as a laundry dryer (1) for drying articles (3) which are laundry (3).

16. Machine (1) according to claim 15, wherein said treating chamber (2) is a rotatable drum (2).

17. Machine (1) according to one of the preceding claims, wherein at least one of the heat source (7) and the heat sink (8) is a counter flow heat exchanger (7, 8).

18. Machine (1) according to one of the preceding claims, wherein said compressor (9) has a electric motor (13) that is a synchronous motor (13) with permanent magnetic rotor, and wherein said operating unit (12) includes an inverter circuit (18) connected to said motor (13) for controlling said motor (13).

19. Machine (1) according to one of the preceding claims, wherein said expander (10) is controllable by said operating unit (12).

20. Machine (1) according to one of the preceding claims, wherein said temperature sensor (14, 14') is thermally coupled to said heat source (7).

21. Set of drying processes for alternative execution comprising at least one drying process for drying humid articles (3) by process air in a machine (1) comprising a treating chamber (2) for drying humid articles (3) by process air, a process air guide (5) for guiding the process air through said treating chamber (2) in a first circuit closed in itself, said process air guide (5) comprising a first blower (6) for driving the process air, a heat source (7) for heating the process air and placed upstream of said treating chamber (2), and a heat sink (8) for cooling the process air and placed downstream of said treating chamber (2), wherein said heat source (7) and said heat sink (8) are included in a heat pump (7, 8, 9, 10, 11) wherein said heat source (7) is provided for transferring heat from a refrigerant to the process air by liquefying the refrigerant, and wherein said heat sink (8) is provided for transferring heat from the process air to the refrigerant by evaporating the refrigerant, said heat pump (7, 8, 9, 10, 11) further comprising a controllable compressor (9) for compressing and driving the refrigerant through said heat pump (7, 8, 9, 10, 11) for transferring heat from said heat sink (8) to said heat source (7), an expander (10) for expanding the refrigerant, and a refrigerant guide (11) for guiding the refrigerant through said heat pump (7, 8, 9, 10, 11) in a second circuit closed in itself, and an operating unit (12) for operating said process air guide (5) and said heat pump (7, 8, 9, 10, 11) in treating the articles (3), said at least one drying process including the following steps:
(a) initiating operation of said blower (6) to drive the process air through said process air guide (5), initiating operation of said compressor (9) to increase compressing and driving said refrigerant through said refrigerant guide (11), for a respective predetermined time interval;
(b) measuring the power input, and measuring the temperature, and operating said compressor (9) at a power input equal to a respective predetermined power input until the temperature has reached a respective predetermined temperature threshold, and from then operating said compressor (9) at a power input below said respective predetermined power input to keep the temperature at said respective predetermined temperature threshold, and continuing step (b) until the drying of said articles (3) is completed.

22. Set according to claim 21, wherein said process air is guided at a pressure equal to an ambient pressure.

23. Set according to one of claims 21 and 22, which comprises two drying processes including a first drying process and a second drying process for alternative execution, wherein said respective power input of said first drying process is greater than said respective power input of said second drying process, and said respective temperature threshold of said first drying process is greater than said respective temperature threshold of said second drying process.

24. Set according to claim 23, wherein said respective temperature threshold of said first drying process is a safety threshold of said compressor (9).

25. Set according to claim 24, wherein, in step (b) of said first drying process, the temperature is maintained lower than said safety threshold.

## Patentansprüche

1. Maschine (1), welche umfasst: eine Behandlungskammer (2) zum Trocknen feuchter Artikel (3) durch Prozessluft, eine Prozessluftführung (5) zum Leiten der Prozessluft durch die Behandlungskammer (2) hindurch in einem ersten in sich geschlossenen Kreislauf, wobei diese Prozessluftführung (5) ein erstes Gebläse (6) zum Fördern der Prozessluft, eine Wärmequelle (7) zum Heizen der Prozessluft, die stromaufwärts der Behandlungskammer (2) angeordnet ist, und eine Wärmesenke (8) zum Kühlen der Prozessluft, die stromabwärts der Behandlungskammer (2) angeordnet ist, umfasst, wobei die Wärmequelle (7) und die Wärmesenke (8) in einer Wärmepumpe (7, 8, 9, 10, 11) enthalten sind, wobei die Wärmequelle (7) dafür vorgesehen ist, Wärme von einem Kältemittel auf die Prozessluft durch Verflüssigen des Kältemittels zu übertragen, und wobei die Wärmesenke (8) dafür vorgesehen ist, Wärme von der Prozessluft auf das Kältemittel durch Verdampfen des Kältemittels zu übertragen, wobei die Wärmepumpe (7, 8, 9, 10, 11) ferner einen steuerbaren Verdichter (9) zum Verdichten und Fördern des Kältemittels durch die Wärmepumpe (7, 8, 9, 10, 11) hindurch zum Übertragen von Wärme von der Wärmesenke (8) auf die Wärmequelle (7), einen Expander (10) zum Entspannen des Kältemittels und eine Kältemittelführung (11) zum Leiten des Kältemittels durch die Wärmepumpe (7, 8, 9, 10, 11) hindurch in einem zweiten in sich geschlossenen Kreislauf umfasst, und eine Betriebseinheit (12) zum Betreiben der Prozessluftführung (5) und der Wärmepumpe (7, 8, 9, 10, 11) beim Behandeln der Artikel (3), wobei diese Betriebseinheit (12) einen Leistungssensor (13) zum Messen einer Eingangsleistung zum Betreiben des Verdichters (9) und einen Temperatursensor (14, 14') zum Messen einer Temperatur des Kältemittels in einem durchgehenden Teil der Kältemittelführung (11), welcher die Wärmequelle (7) enthält und den Verdichter (9) und den Expander (10) nicht enthält, aufweist, wobei diese Betriebseinheit (12) dafür vorgesehen ist, den Verdichter (9) so zu betreiben, dass wenigstens ein Trocknungsprozess zum Trocknen der in der Behandlungskammer (2) angeordneten feuchten Artikel (3) durchgeführt wird, wobei dieser Trocknungsprozess die folgenden Schritte beinhaltet:
(a) Einleiten des Betriebs des Gebläses (6), um die Prozessluft durch die Prozessluftführung (5) zu fördern, Einleiten des Betriebs des Verdichters (9), um die Verdichtung zu erhöhen und das Kältemittel durch die Kältemittelführung (11) zu fördern, für ein jeweiliges vorbestimmtes Zeitintervall;
(b) Messen der Eingangsleistung und Messen der Temperatur, und Betreiben des Verdichters (9) mit einer Eingangsleistung, die gleich einer jeweiligen vorbestimmten Eingangsleistung ist, bis die Temperatur einen jeweiligen vorbestimmten Temperaturschwellenwert erreicht hat, und von da an Betreiben des Verdichters (9) mit einer Eingangsleistung unterhalb der jeweiligen vorbestimmten Eingangsleistung, um die Temperatur bei dem jeweiligen vorbestimmten Temperaturschwellenwert zu halten, und Fortsetzen von Schritt (b), bis das Trocknen der Artikel (3) abgeschlossen ist.

2. Maschine (1) nach Anspruch 1, wobei die Betriebseinheit (12) einen Drehzahlsensor (15) zum Messen einer Betriebsdrehzahl des Verdichters (9) aufweist und dazu vorgesehen ist, in Schritt (a) des wenigstens einen Trocknungsprozesses die Betriebsdrehzahl zu messen und den Betrieb des Verdichters (9) so zu steuern, dass die Betriebsdrehzahl für das jeweilige vorbestimmte Zeitintervall bei einem vorbestimmten Anfangswert gehalten wird.

3. Maschine (1) nach Anspruch 2, wobei die Betriebseinheit (12) dazu vorgesehen ist, in Schritt (a) und nach Ablauf des jeweiligen vorbestimmten Zeitintervalls die Eingangsleistung zu messen und die Betriebsdrehzahl bei wenigstens dem jeweiligen vorbestimmten Anfangswert zu halten, bis die Eingangsleistung die jeweilige vorbestimmte Eingangsleistung erreicht hat, und danach mit Schritt (b) fortzufahren.

4. Maschine (1) nach Anspruch 2, wobei die Betriebseinheit (12) dazu vorgesehen ist, in Schritt (a) und nach Ablauf des jeweiligen vorbestimmten Zeitintervalls die Eingangsleistung zu messen und die Betriebsdrehzahl von dem jeweiligen vorbestimmten Anfangswert zu erhöhen, bis die Eingangsleistung die jeweilige vorbestimmte Eingangsleistung erreicht hat, und danach mit Schritt (b) fortzufahren.

5. Maschine (1) nach einem der Ansprüche 2 bis 4, wobei eine Reinigungseinheit (16) zum Reinigen der Wärmesenke (8), die durch die Betriebseinheit (12) betreibbar ist, vorgesehen ist und die Betriebseinheit dazu vorgesehen ist, in Schritt (b) die Reinigungseinheit (16) zu betreiben, während sie den Verdichter (9) mit Halten der Betriebsdrehzahl bei einem vorbestimmten Reinigungswert betreibt.

6. Maschine (1) nach einem der vorhergehenden Ansprüche, wobei der wenigstens eine Trocknungsprozess einen ersten Trocknungsprozess und einen zweiten Trocknungsprozess zur alternativen Ausführung beinhaltet, wobei die jeweilige Eingangsleistung des ersten Prozesses größer als die jeweilige Eingangsleistung des zweiten Trocknungsprozesses ist und der jeweilige Temperaturschwellenwert des ersten Trocknungsprozesses größer als der jeweilige Temperaturschwellenwert des zweiten Trocknungsprozesses ist.

7. Maschine (1) nach Anspruch 6, wobei der jeweilige Temperaturschwellenwert des ersten Trocknungsprozesses ein Sicherheitsschwellenwert des Verdichters (9) ist.

8. Maschine (1) nach Anspruch 7, wobei in Schritt (b) des ersten Trocknungsprozesses die Temperatur niedriger als der Sicherheitsschwellenwert gehalten wird.

9. Maschine (1) nach einem der Ansprüche 6 bis 8, wobei die Wärmepumpe (7, 8, 9, 10, 11) für einen Betrieb in dem zweiten Trocknungsprozess ausgelegt ist.

10. Maschine (1) nach Anspruch 9, wobei der erste Trocknungsprozess und der zweite Trocknungsprozess jeweils eine jeweilige Überhitzung in dem Kältemittel beim Austreten aus der Wärmesenke (8) aufweisen, wobei diese jeweilige Überhitzung des zweiten Trocknungsprozesses zwischen 6 °C und 20 °C beträgt.

11. Maschine (1) nach einem der vorhergehenden Ansprüche, welche eine Kühleinheit (17) umfasst und durch die Betriebseinheit (12) zum Kühlen der Wärmepumpe (7, 8, 9, 10, 11) betreibbar ist, und wobei die Betriebseinheit (12) dazu vorgesehen ist, die Kühleinheit (17) zu betreiben, wenn die Temperatur den jeweiligen vorbestimmten Temperaturschwellenwert überschreitet.

12. Maschine (1) nach Anspruch 11, wobei die Kühleinheit (17) ein zweites Gebläse (17) zum Vorbeileiten von Kühlluft entlang der Wärmepumpe (7, 8, 9, 10, 11) umfasst.

13. Maschine (1) nach einem der vorhergehenden Ansprüche, wobei das Kältemittel aus der Gruppe ausgewählt ist, welche die Mittel R 290, R134a, R152a, R407C, R410A und R744 umfasst.

14. Maschine (1) nach einem der vorhergehenden Ansprüche, welche als ein Haushaltgerät (1) ausgeführt ist.

15. Maschine (1) nach Anspruch 14, welche als ein Wäschetrockner (1) zum Trocknen von Artikeln (3), bei denen es sich um Wäsche (3) handelt, ausgeführt ist.

16. Maschine (1) nach Anspruch 15, wobei die Behandlungskammer (2) eine drehbare Trommel (2) ist.

17. Maschine (1) nach einem der vorhergehenden Ansprüche, wobei die Wärmequelle (7) und/oder die Wärmesenke (8) Gegenstromwärmetauscher (7, 8) sind.

18. Maschine (1) nach einem der vorhergehenden Ansprüche, wobei der Verdichter (9) einen Elektromotor (13) aufweist, welcher ein Synchronmotor (13) mit permanent magnetischem Rotor ist, und wobei die Betriebseinheit (12) eine mit diesem Motor (13) verbundene Umrichterschaltung (18) zur Steuerung des Motors (13) aufweist.

19. Maschine (1) nach einem der vorhergehenden Ansprüche, wobei der Expander (10) von der Betriebseinheit (12) steuerbar ist.

20. Maschine (1) nach einem der vorhergehenden Ansprüche, wobei der Temperatursensor (14, 14') mit der Wärmequelle (7) thermisch gekoppelt ist.

21. Satz von Trocknungsprozessen zur alternativen Ausführung, welcher wenigstens einen Trocknungsprozess zum Trocknen feuchter Artikel (3) durch Prozessluft in einer Maschine (1) umfasst, welche eine Behandlungskammer (2) zum Trocknen feuchter Artikel (3) durch Prozessluft, eine Prozessluftführung (5) zum Leiten der Prozessluft durch die Behandlungskammer (2) hindurch in einem ersten in sich geschlossenen Kreislauf, wobei diese Prozessluftführung (5) ein erstes Gebläse (6) zum Fördern der Prozessluft, eine Wärmequelle (7) zum Heizen der Prozessluft, die stromaufwärts der Behandlungskammer (2) angeordnet ist, und eine Wärmesenke (8) zum Kühlen der Prozessluft, die stromabwärts der Behandlungskammer (2) angeordnet ist, umfasst, wobei die Wärmequelle (7) und die Wärmesenke (8) in einer Wärmepumpe (7, 8, 9, 10, 11) enthalten sind, wobei die Wärmequelle (7) dafür vorgesehen ist, Wärme von einem Kältemittel auf die Prozessluft durch Verflüssigen des Kältemittels zu übertragen, und wobei die Wärmesenke (8) dafür vorgesehen ist, Wärme von der Prozessluft auf das Kältemittel durch Verdampfen des Kältemittels zu übertragen, wobei die Wärmepumpe (7, 8, 9, 10, 11) ferner einen steuerbaren Verdichter (9) zum Verdichten und Fördern des Kältemittels durch die Wärmepumpe (7, 8, 9, 10, 11) hindurch zum Übertragen von Wärme von der Wärmesenke (8) auf die Wärmequelle (7), einen Expander (10) zum Entspannen des Kältemittels und eine Kältemittelführung (11) zum Leiten des Kältemittels durch die Wärmepumpe (7, 8, 9, 10, 11) hindurch in einem zweiten in sich geschlossenen Kreislauf umfasst, und eine Betriebseinheit (12) zum Betreiben der Prozessluftführung (5) und der Wärmepumpe (7, 8, 9, 10, 11) beim Behandeln der Artikel (3), umfasst, wobei der wenigstens Trocknungsprozess die folgenden Schritte beinhaltet:
(a) Einleiten des Betriebs des Gebläses (6), um die Prozessluft durch die Prozessluftführung (5) zu fördern, Einleiten des Betriebs des Verdichters (9), um die Verdichtung zu erhöhen und das Kältemittel durch die Kältemittelführung (11) zu fördern, für ein jeweiliges vorbestimmtes Zeitintervall;
(b) Messen der Eingangsleistung und Messen der Temperatur, und Betreiben des Verdichters (9) mit einer Eingangsleistung, die gleich einer jeweiligen vorbestimmten Eingangsleistung ist, bis die Temperatur einen jeweiligen vorbestimmten Temperaturschwellenwert erreicht hat, und von da an Betreiben des Verdichters (9) mit einer Eingangsleistung unterhalb der jeweiligen vorbestimmten Eingangsleistung, um die Temperatur bei dem jeweiligen vorbestimmten Temperaturschwellenwert zu halten, und Fortsetzen von Schritt (b), bis das Trocknen der Artikel (3) abgeschlossen ist.

22. Satz nach Anspruch 21, wobei die Prozessluft bei einem Druck geleitet wird, der gleich einem Umgebungsdruck ist.

23. Satz nach einem der Ansprüche 21 und 22, welcher zwei Trocknungsprozesse umfasst, die einen ersten Trocknungsprozess und einen zweiten Trocknungsprozess zur alternativen Ausführung beinhalten, wobei die jeweilige Eingangsleistung des ersten Trocknungsprozesses größer als die jeweilige Eingangsleistung des zweiten Trocknungsprozesses ist und der jeweilige Temperaturschwellenwert des ersten Trocknungsprozesses größer als der jeweilige Temperaturschwellenwert des zweiten Trocknungsprozesses ist.

24. Satz nach Anspruch 23, wobei der jeweilige Temperaturschwellenwert des ersten Trocknungsprozesses ein Sicherheitsschwellenwert des Verdichters (9) ist.

25. Satz nach Anspruch 24, wobei in Schritt (b) des ersten Trocknungsprozesses die Temperatur niedriger als der Sicherheitsschwellenwert gehalten wird.

## Revendications

1. Machine (1) comprenant une chambre de traitement (2) pour sécher des articles humides (3) par un air de process, un guide d'air de process (5) pour guider l'air de process à travers ladite chambre de traitement (2) dans un premier circuit lui-même fermé, ledit guide d'air de process (5) comprenant une première soufflerie (6) pour entraîner l'air de process, une source de chaleur (7) pour chauffer l'air de process et placée en amont de ladite chambre de traitement (2), et un dissipateur de chaleur (8) pour refroidir l'air de process et placé en aval de ladite chambre de traitement (2), dans laquelle ladite source de chaleur (7) et ledit dissipateur de chaleur (8) sont inclus dans une pompe à chaleur (7, 8, 9, 10, 11) dans laquelle ladite source de chaleur (7) est prévue pour transférer de la chaleur depuis un réfrigérant vers l'air de process en liquéfiant le réfrigérant, et dans laquelle ledit dissipateur de chaleur (8) est prévu pour transférer de la chaleur depuis l'air de process vers le réfrigérant en évaporant le réfrigérant, ladite pompe à chaleur (7, 8, 9, 10, 11) comprenant en outre un compresseur réglable (9) pour comprimer et entraîner le réfrigérant à travers ladite pompe à chaleur (7, 8, 9, 10, 11) pour transférer de la chaleur depuis ledit dissipateur de chaleur (8) vers ladite source de chaleur (7), un dilatateur (10) pour dilater le réfrigérant, et un guide de réfrigérant (11) pour guider le réfrigérant à travers ladite pompe à chaleur (7, 8, 9, 10, 11) dans un deuxième circuit lui-même fermé, et une unité d'actionnement (12) pour actionner ledit guide d'air de process (5) et ladite pompe à chaleur (7, 8, 9, 10, 11) pour le traitement des articles (3), ladite unité d'actionnement (12) comprenant un capteur de puissance (13) pour mesurer une entrée de puissance pour actionner ledit compresseur (9), et un capteur de température (14, 14') pour mesurer une température dudit réfrigérant dans une partie continue dudit guide de réfrigérant (11) incluant ladite source de chaleur (7) et excluant ledit compresseur (9) et ledit dilatateur (10), dans laquelle ladite unité d'actionnement (12) est prévue pour actionner ledit compresseur (9) en vue d'effectuer au moins un processus de séchage pour sécher les articles humides (3) placés dans ladite chambre de traitement (2), ledit processus de séchage incluant les étapes suivantes :
(a) initier un actionnement de ladite soufflerie (6) pour entraîner l'air de process à travers ledit guide d'air de process (5), initier un actionnement dudit compresseur (9) pour augmenter la compression et l'entraînement dudit réfrigérant à travers ledit guide de réfrigérant (11), pendant un intervalle de temps prédéterminé respectif ;
(b) mesurer l'entrée de puissance, et mesurer la température, et actionner ledit compresseur (9) à une entrée de puissance égale à une entrée de puissance prédéterminée respective jusqu'à ce que la température ait atteint un seuil de température prédéterminé respectif, et partant de là actionner ledit compresseur (9) à une entrée de puissance inférieure à ladite entrée de puissance prédéterminée respective pour maintenir la température audit seuil de température prédéterminé respectif, et poursuivre l'étape (b) jusqu'à ce que le séchage desdits articles (3) soit terminé.

2. Machine (1) selon la revendication 1, dans laquelle ladite unité d'actionnement (12) inclut un capteur de vitesse (15) pour mesurer une vitesse d'actionnement dudit compresseur (9), et est prévue pour, à l'étape (a) dudit au moins un processus de séchage, mesurer la vitesse d'actionnement, et commander l'actionnement dudit compresseur (9) pour maintenir la vitesse d'actionnement à une valeur initiale prédéterminée pendant l'intervalle de temps prédéterminé respectif.

3. Machine (1) selon la revendication 2, dans laquelle ladite unité d'actionnement (12) est prévue pour, à l'étape (a) et après l'expiration de l'intervalle de temps prédéterminé respectif, mesurer l'entrée de puissance et maintenir la vitesse d'actionnement au moins à la valeur initiale prédéterminée respective jusqu'à ce que l'entrée de puissance ait atteint l'entrée de puissance prédéterminée respective, et ensuite passer à l'étape (b).

4. Machine (1) selon la revendication 2, dans laquelle l'unité d'actionnement (12) est prévue pour, à l'étape (a) et après l'expiration de l'intervalle de temps prédéterminé respectif, mesurer l'entrée de puissance et augmenter la vitesse d'actionnement depuis la valeur initiale prédéterminée respective jusqu'à ce que l'entrée de puissance ait atteint l'entrée de puissance prédéterminée respective, et puis passer à l'étape (b).

5. Machine (1) selon l'une des revendications 2 à 4, dans laquelle une unité de nettoyage (16) pour nettoyer ledit dissipateur de chaleur (8) et actionnable par ladite unité d'actionnement (12) est prévue, et ladite unité d'actionnement est prévue pour, à l'étape (b), actionner ladite unité de nettoyage (16) tout en actionnant ledit compresseur (9) et en maintenant la vitesse d'actionnement à une valeur de nettoyage prédéterminée.

6. Machine (1) selon l'une des revendications précédentes, dans laquelle ledit au moins un processus de séchage inclut un premier processus de séchage et un deuxième processus de séchage pour une exécution alternative, dans laquelle ladite entrée de puissance respective dudit premier processus est supérieure à ladite entrée de puissance respective dudit deuxième processus de séchage, et ledit seuil de température respectif dudit premier processus de séchage est supérieur audit seuil de température respectif dudit deuxième processus de séchage.

7. Machine (1) selon la revendication 6, dans laquelle ledit seuil de température respectif dudit premier processus de séchage est un seuil de sécurité dudit compresseur (9).

8. Machine (1) selon la revendication 7, dans laquelle, à l'étape (b) dudit premier processus de séchage, la température est maintenue inférieure audit seuil de sécurité.

9. Machine (1) selon l'une des revendications 6 à 8, dans laquelle ladite pompe à chaleur (7, 8, 9, 10, 11) est conçue pour un actionnement dans ledit deuxième processus de séchage.

10. Machine (1) selon la revendication 9, dans laquelle chacun dudit premier processus de séchage et dudit deuxième processus de séchage a une surchauffe respective dans ledit réfrigérant au moment la sortie hors dudit dissipateur de chaleur (8), ladite surchauffe respective dudit deuxième processus de séchage se situant entre 6°C et 20°C.

11. Machine (1) selon l'une des revendications précédentes, comprenant une unité de refroidissement (17) et actionnable par ladite unité d'actionnement (12) pour refroidir ladite pompe à chaleur (7, 8, 9, 10, 11), et dans laquelle ladite unité d'actionnement (12) est prévue pour actionner ladite unité de refroidissement (17) lorsque la température dépasse ledit seuil de température prédéterminé respectif.

12. Machine (1) selon la revendication 11, dans laquelle ladite unité de refroidissement (17) comprend une deuxième soufflerie (17) pour faire passer de l'air de refroidissement le long de ladite pompe à chaleur (7, 8, 9, 10, 11).

13. Machine (1) selon l'une des revendications précédentes, dans laquelle le réfrigérant est sélectionné dans le groupe comprenant les agents R290, R134a, R152a, R407C, R410A et R744.

14. Machine (1) selon l'une des revendications précédentes, qui est représentée en tant qu'appareil domestique (1).

15. Machine (1) selon la revendication 14, qui est représentée en tant que sèche-linge (1) pour sécher des articles (3) qui sont du linge (3).

16. Machine (1) selon la revendication 15, dans laquelle ladite chambre de traitement (2) est un tambour rotatif (2).

17. Machine (1) selon l'une des revendications précédentes, dans laquelle au moins l'un parmi la source de chaleur (7) et le dissipateur de chaleur (8) est un échangeur de chaleur à contre-courant (7, 8)

18. Machine (1) selon l'une des revendications précédentes, dans laquelle ledit compresseur (9) a un moteur électrique (13) qui est un moteur synchrone (13) avec un rotor magnétique permanent, et dans laquelle ladite unité d'actionnement (12) inclut un circuit inverseur (18) connecté audit moteur (13) pour commander ledit moteur (13).

19. Machine (1) selon l'une des revendications précédentes, dans laquelle ledit dilatateur (10) peut être commandé par ladite unité d'actionnement (12).

20. Machine (1) selon l'une des revendications précédentes, dans laquelle ledit capteur de température (14, 14') est couplé thermiquement à ladite source de chaleur (7).

21. Ensemble de processus de séchage pour une exécution alternative comprenant au moins un processus de séchage pour sécher des articles humides (3) par un air de process dans une machine (1) comprenant une chambre de traitement (2) pour sécher des articles humides (3) par un air de process, un guide d'air de process (5) pour guider l'air de process à travers ladite chambre de traitement (2) dans un premier circuit lui-même fermé, ledit guide d'air de process (5) comprenant une première soufflerie (6) pour entraîner l'air de process, une source de chaleur (7) pour chauffer l'air de process et placée en amont de ladite chambre de traitement (2), et un dissipateur de chaleur (8) pour refroidir l'air de process et placé en aval de ladite chambre de traitement (2), dans lequel ladite source de chaleur (7) et ledit dissipateur de chaleur (8) sont inclus dans une pompe à chaleur (7, 8, 9, 10, 11) dans laquelle ladite source de chaleur (7) est prévue pour transférer de la chaleur depuis un réfrigérant vers l'air de process en liquéfiant le réfrigérant, et dans lequel ledit dissipateur de chaleur (8) est prévu pour transférer de la chaleur depuis l'air de process vers le réfrigérant en évaporant le réfrigérant, ladite pompe à chaleur (7, 8, 9, 10, 11) comprenant en outre un compresseur pouvant être commandé (9) pour comprimer et entraîner le réfrigérant à travers ladite pompe à chaleur (7, 8, 9, 10, 11) pour transférer de la chaleur depuis ledit dissipateur de chaleur (8) vers ladite source de chaleur (7), un dilatateur (10) pour dilater le réfrigérant, et un guide de réfrigérant (11) pour guider le réfrigérant à travers ladite pompe à chaleur (7, 8, 9, 10, 11) dans un deuxième circuit lui-même fermé, et une unité d'actionnement (12) pour actionner ledit guide d'air de process (5) et ladite pompe à chaleur (7, 8, 9, 10, 11) lors du traitement des articles (3), ledit au moins un processus de séchage incluant les étapes suivantes :
(a) initier une opération de ladite soufflerie (6) pour entraîner l'air de process à travers ledit guide d'air de process (5), initier un actionnement dudit compresseur (9) pour augmenter la compression et l'entraînement dudit réfrigérant à travers ledit guide de réfrigérant (11), pendant un intervalle de temps prédéterminé respectif ;
(b) mesurer l'entrée de puissance, et mesurer la température, et actionner ledit compresseur (9) à une entrée de puissance égale à une entrée de puissance prédéterminée respective jusqu'à ce que la température ait atteint un seuil de température prédéterminé respectif, et partant de là actionner ledit compresseur (9) à une entrée de puissance inférieure à ladite entrée de puissance prédéterminée respective pour maintenir la température audit seuil de température prédéterminé respectif, et poursuivre l'étape (b) jusqu'à ce que le séchage desdits articles (3) soit terminé.

22. Ensemble selon la revendication 21, dans lequel ledit air de process est guidé à une pression égale à une pression ambiante.

23. Ensemble selon l'une des revendications 21 et 22, qui comprend deux processus de séchage incluant un premier processus de séchage et un deuxième processus de séchage pour une exécution alternative, dans lequel ladite entrée de puissance respective dudit premier processus de séchage est supérieure à ladite entrée de puissance respective dudit deuxième processus de séchage, et ledit seuil de température respectif dudit premier processus de séchage est supérieur audit seuil de température respectif dudit deuxième processus de séchage.

24. Ensemble selon la revendication 23, dans lequel ledit seuil de température respectif dudit premier processus de séchage est un seuil de sécurité dudit compresseur (9).

25. Ensemble selon la revendication 24, dans lequel, à l'étape (b) dudit premier processus de séchage, la température est maintenue inférieure audit seuil de sécurité.
